(19) Europäisches Patentamt
European Patent Office
Office européen des brevets

(11) Veröffentlichungsnummer: **0 040 863**
**A1**

# (12) EUROPÄISCHE PATENTANMELDUNG

(21) Anmeldenummer: **81105093.9**

(22) Anmeldetag: **31.08.78**

(51) Int. Cl.³: **C 08 G 63/68,** C 08 G 63/62, C 08 L 69/00

(30) Priorität: **06.09.77 US 830518**
**29.03.78 US 891252**

(43) Veröffentlichungstag der Anmeldung: **02.12.81**
**Patentblatt 81/48**

(84) Benannte Vertragsstaaten: **DE FR GB**

(60) Veröffentlichungsnummer der früheren Anmeldung nach Art. 76 EPÜ: **0001096**

(71) Anmelder: **Mobay Chemical Corporation, Penn Lincoln Parkway West, Pittsburgh, Pennsylvania 15205 (US)**

(72) Erfinder: **Krishnan, Sivaram, Achsenstrasse 12, D-4130 Moers (DE)**
Erfinder: **Baron, Arthur L., 211 East Thistle Court, New Martinsville West Virginia, 261555 (US)**

(74) Vertreter: **Gremm, Joachim, Dr. et al, Bayer AG c/o Zentralbereich Patente, Marken und Lizenzen Bayerwerk, D-5090 Leverkusen (DE)**

## (54) Polycarbonatgemische mit verbesserter Flammwidrigkeit.

(57) Die Erfindung betrifft ein halogenhaltiges Copolycarbonatgemisch, das verbesserte kritische Dicke und verbesserte Flammwidrigkeit und Feuerwiderstandsfähigkeit aufweist und das Reaktionsprodukt eines aromatischen Diphenols, eines aromatischen Thiodiphenols und eines Kohlensäurederivats wie Phosgen oder Carbonylbromid in Mischung mit einer wirksamen Menge einer halogenhaltigen Verbindung enthält. Bei einer bevorzugten Ausführungsform enthält das Copolycarbonatgemisch außerdem geringe Mengen eines Perfluorsulfonsäure- oder -carbonsäuresalzes.

EP 0 040 863 A1

ACTORUM AG

0001096

MOBAY CHEMICAL CORPORATION

Pittsburgh PA 15 2o5
Penn Lincoln Parkway West
PS/Bu

# Polycarbonatgemische mit verbesserter Flammwidrigkeit

Die Erfindung betrifft Copolycarbonatgemische, insbesondere flammwidrige und feuerwiderstandsfähige Copolycarbonatgemische mit verbesserten Werten der kritischen Dicke und verbesserter Flammwidrigkeit und Feuerwiderstandsfähigkeit.

Polycarbonate, die aus der Reaktion von organischen Dihydroxyverbindungen mit Kohlensäurederivaten erhalten werden, haben auf Grund ihrer ausgezeichneten mechanischen und physikalischen Eigenschaften in großem Umfang technische Anwendung gefunden. Diese thermoplastischen Polymerisate eignen sich besonders gut für die Herstellung von Formteilen, bei denen Schlagzähigkeit, Starrheit, Steifigkeit, Zähigkeit, thermische Stabilität, Maßhaltigkeit sowie ausgezeichnete elektrische Eigenschaften erforderlich sind.

Einer der Nachteile von Polycarbonaten bei Verwendung in Formteilen ist jedoch die niedrigen Werte der kritischen Dicke des Polycarbonats. Dieser Mangel begrenzt die Wandstärke auf einen Wert unterhalb der kritischen Dicke.

Polycarbonatkunststoffe weisen bekanntlich hohe Izod-Kerbschlagzähigkeiten (ASTM D-256) auf. Diese Werte sind



BAD ORIGINAL

jedoch von der Dicke des Prüfkörpers abhängig. Typisch für einen 3,2 mm dicken Prüfkörper sind Izod-Kerbschlagzähigkeitswerte von etwa 8,54 Nm/cm. Diese hohen Izod-Kerbschlagzähigkeitswerte werden erhalten, weil Prüfkörper einer Dicke von 3,2 mm dünner sind als die kritische Dicke des Polymerisats, so daß beim Aufprall ein geschmeidiger ("hinged") Bruch oder Formungsbruch stattfindet. Dagegen zeigen 6,35 mm dicke Prüfkörper einen scharfen Bruch oder Sprödbruch und Izod-Kerbschlagzähigkeitswerte von nur etwa 1,33 Nm/cm. Es heißt, daß die Dicke von 6,35 mm der Prüfkörper über der kritischen Dicke des Polymerisats liegt. Die "kritische Dicke" wird definiert als die Dicke, bei der eine Diskontinuität oder Unstetigkeit der Izod-Kerbschlagzähigkeitswerte stattfindet. Mit anderen Worten, dies ist die Dicke, bei der ein Übergang von einem Sprödbruch zu einem Formungsbruch oder umgekehrt stattfindet. Ein Normprüfkörper des Polycarbonats, dessen Dicke größer ist als die kritische Dicke, zeigt somit Sprödbrüche, während ein Normprüfkörper, dessen Dicke geringer ist als die kritische Dicke, geschmeidige Brüche oder Formungsbrüche zeigt. Ferner beträgt die kritische Dicke eines Polycarbonats auf Basis von Bisphenol A mit einem Schmelzindex von 3 bis 6 g/10 Minuten bei 300°C (ASTM D-1238) etwa 5,06 mm.

Das Problem der kritischen Dicke wird weiter kompliziert, wenn das Polycarbonat-Formteil einer Vorschrift hinsichtlich der Entflammbarkeit bei Anwendungen genügen muß, bei denen hohe Temperaturen und/oder Feuer zur Einwirkung kommen können. Übliche Copolycarbonate auf Basis eines mit einem Kohlensäurederivat umgesetzten aromatischen Diols und eines halogenierten Diols gelten als wirksame feuerhemmende und flammwidrige Polymere (V-O bei einer Dicke von 3,2 mm gemäß UL Subject 94). Diese Copolycarbonate weisen allgemein annehmbare physikalische Eigenschaften auf und genügen gleichzeitig den Vorschriften in bezug auf Entflammbarkeit. Die kritische Dicke von



BAD ORIGINAL

0040863
0001096

Copolycarbonaten, in denen halogenierte Diole verwendet werden, ist jedoch sehr gering und beträgt beispielsweise etwa 3,3 bis 3,56 mm bei einem Polymer, das etwa 5 bis 6 Gew.-% Brom in Form eines halogenierten Diols enthält. Ferner können diese Copolycarbonate undurchsichtig sein, wenn sie in geringer Dicke (etwa 1,6 mm) verwendet werden. Diese Undurchsichtigkeit wird mit zunehmender Querschnittsdicke stärker.

Die immer anspruchsvolleren Anwendungen von Polycarbonaten erfordern weiter verbesserte Flammwidrigkeit und Feuerwiderstandsfähigkeit, jedoch wird selbst bei Zusatz von 12 Gew.-% Halogen zu einem üblichen Polycarbonat oder Copolycarbonat eine Formmasse erhalten, die bei einer Dicke von 3,2 mm einen Gütewert von V-0, aber bei 1,6 mm Dicke noch einen Gütewert von V-2 gemäß UL Subject 94 hat. Eine solche Formmasse weist schlechte mechanische Eigenschaften, insbesondere schlechte Werte der kritischen Dicke im Vergleich zu üblichen Polycarbonaten auf und ist im allgemeinen undurchsichtig.

Es besteht somit ein Bedürfnis für Polycarbonat-Formmassen mit weiter verbesserter Flammwidrigkeit und Feuerwiderstandsfähigkeit und guten mechanischen Eigenschaften.

Gegenstand der Erfindung ist ein aromatisches Copolycarbonatgemisch, das verbesserte kritische Dicke und verbesserte Eigenschaften in bezug auf Entflammbarkeit aufweist und in hohem Maße transparent ist.

Die erfindungsgemäßen halogenhaltigen Copolycarbonatgemische mit verbesserten Werten der kritischen Dicke und verbesserter Flammwidrigkeit und Feuerwiderstandsfähigkeit enthalten ein aromatisches Copolycarbonat in Form des Reaktionsprodukts eines aromatischen Diphenols, eines aromatischen Thiodiphenols und eines Kohlensäurederivats, z.B. Phosgen oder Carbonylbromid, in Mischung mit einer wirksamen Menge einer halogenhaltigen Verbindung. Bei einer bevorzugten Ausführungsform enthält das Copolycarbonat-



BAD ORIGINAL

gemisch außerdem geringe Mengen eines Perfluorsulfonsäure- oder -carbonsäuresalzes.

Die Copolycarbonate gemäß der Erfindung können nach üblichen Verfahren der Herstellung von Polycarbonatharzen hergestellt werden und können Gewichtsmittel-Molekulargewichte von etwa 10.000 bis 200.000, vorzugsweise von etwa 20.000 bis 80.000, und insbesondere eine Schmelzflußrate von etwa 1 bis 24 g/10 Min. bei 300°C gemäß ASTM D-1238 haben, wobei eine Schmelzflußrate von etwa 2 bis 6 g/ 10 Minuten besonders bevorzugt wird.

Beliebige geeignete Verfahren, Reaktionsteilnehmer, Katalysatoren, Lösungsmittel, Reaktionsbedingungen u.dgl., die üblicherweise bei der Synthese von Polycarbonatharzen zur Anwendung kommen und beispielsweise in den DE-PSen 962 274 und 1 046 311 und in den US-PSen 2 964 794, 2 970 131, 2 991 273, 2 999 835, 2 999 846, 3 028 365, 3 153 008 3 187 065, 3 215 668 und 3 248 414 beschrieben werden, können auch für die Herstellung der Copolycarbonate gemäß der Erfindung zur Anwendung kommen. Bevorzugt wird das Verfahren der Grenzflächen-Polykondensation.

Beim Grenzflächen-Polykondensationsverfahren werden durch Umsetzung der aromatischen Dihydroxyverbindungen mit einem Alkalihydroxyd oder Erdalkalioxyd oder -hydroxyd vorab Salze der Hydroxyverbindungen hergestellt. Das Salzgemisch ist in einer wäßrigen Lösung oder Suspension vorhanden und wird mit Phosgen, Carbonylbromid oder Bischlorameisensäureestern der aromatischen Dihydroxyverbindungen umgesetzt. Dem Reaktionsgemisch wird ein organisches Lösungsmittel zugesetzt, das das Polymer , aber nicht die aromatischen Dihydroxysalze löst. Beispielsweise werden chlorierte und nicht chlorierte aliphatische Kohlenwasserstoffe oder chlorierte oder nicht chlorierte aromatische Kohlenwasserstoffe als organisches Lösungsmittel verwendet, das das Kondensationsprodukt löst. Beispiele geeigneter Lösungsmittel sind



ORIGINAL

Cyclohexan, Methylcyclohexan, Benzol, Toluol, Xylol, Methylenchlorid, Chloroform, Tetrachlorkohlenstoff und Chlorbenzol.

Zur Begrenzung des Molekulargewichts können monofunktionelle Reaktionsteilnehmer wie Monophenole, z.B. die Propyl-, Isopropyl- und Butylphenole, insbesondere p-t-Butylphenol und Phenol selbst, verwendet werden. Zur Beschleunigung der Reaktion können Katalysatoren, z.B. tertiäre Amine, quaternäre Ammonium-, Phosphonium- oder Arsoniumsalze u.dgl. verwendet werden. Die Reaktionstemperaturen sollten im Bereich von etwa $-20^{o}$ bis $+150^{o}C$, vorzugsweise im Bereich von $0^{o}$ bis etwa $100^{o}C$ liegen.

Beim Polykondensationsverfahren in homogener Phase werden die gelösten Reaktionskomponenten in einem inerten Lösungsmittel in Gegenwart einer äquivalenten Menge einer tertiären Aminbase, die für die Absorption der erzeugten HCl erforderlich ist, z.B. N,N-Dimethylanilin, N,N-Dimethylcyclohexylamin oder vorzugsweise Pyridin, polykondensiert. Bei einem weiteren Verfahren kann ein Diarylcarbonat mit den aromatischen Dihydroxyverbindungen unter Bildung des Polycarbonats umgesetzt werden.

Natürlich können bei den vorstehend beschriebenen Verfahren in chemisch geeigneter Weise sowohl die aromatischen Dihydroxyverbindungen als auch die Monohydroxyverbindungen in Form von Alkalisalzen und/oder Bishalogenameisensäureestern und die dann noch erforderliche Menge des Phosgens oder Carbonylbromids kombiniert werden, um hochmolekulare Produkte zu bilden. Auch andere Syntheseverfahren, wie sie in der US-PS 3 912 688 beschrieben werden, können zur Herstellung der Polycarbonate gemäß der Erfindung angewandt werden.

Als aromatische Diphenole eignen sich für die Zwecke der Erfindung beispielsweise die folgenden Verbindungen: Hydrochinon, Resorcin, Dihydroxyphenyle, Bis-(hydroxy-



BAD ORIGINAL

phenyl)-alkane, Bis-(hydroxyphenyl)cycloalkane, Bis-(hydroxyphenyl)äther, Bis-(hydroxyphenyl)-ketone, Bis-(hydroxyphenyl)-sulfoxyde, Bis-(hydroxyphenyl)-sulfone und α,α-Bis-(hydroxyphenyl)-diisopropylbenzole sowie ihre ringalkylierten Verbindungen. Diese und weitere geeignete aromatische Dihydroxyverbindungen werden beispielsweise in den US-PSen 3 028 365, 2 999 835, 3 148 172, 3 271 368, 2 991 273, 3 271 367, 3 280 078, 3 014 891 und 2 999 846, in den DE-OSen 1 570 703, 2 063 050, 2 063 052, 2 211 956 und 2 211 957, in der FR-PS 1 561 518 und in der Monographie von H. Schnell "Chemistry and Physics of Polycarbonates", Interscience Publishers, New York 1964, beschrieben.

Bevorzugt werden aromatische Diphenole der Formel

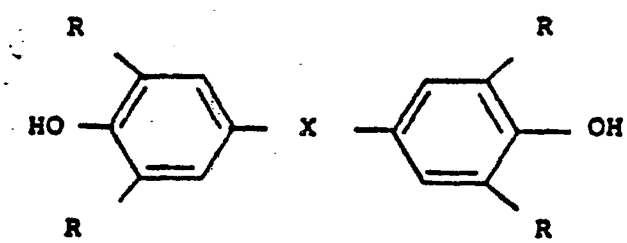

worin die Reste R gleich oder verschieden sind und für H oder $C_1$-$C_4$-Alkyl stehen und worin X für eine Bindung, $C_1$-$C_8$-Alkylen, $C_2$-$C_8$-Alkyliden, $C_5$-$C_{15}$-Cycloalkylen, $C_5$-$C_{15}$-Cycloalkyliden, $-SO_2-$, -SO-, -CO- oder

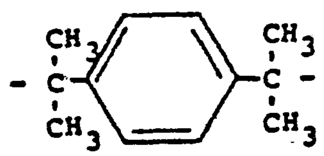

steht.

Als Beispiele dieser Diphenole seien genannt: 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-cyclohexan, α,α-Bis-(4-hydroxyphenyl)-p-diisopropyl-benzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-



BAD ORIGINAL

(3,5-dimethyl-4-hydroxyphenyl)-2-methylbutan, 1,1-Bis-(3,5-dimethyl-4-hydroxyphenyl)-cyclohexan und , -Bis-(3,5-Dimethyl-4-hydroxyphenyl)-p-diisopropylbenzol.

Als Beispiele besonders bevorzugter aromatischer Diphenole sind 2,2-Bis-(4-hydroxyphenyl)-propan, 2,2-Bis-(3,5-dimethyl-4-hydroxyphenyl)-propan und 1,1-Bis-(4-hydroxyphenyl)-cyclohexan zu nennen.

Am meisten bevorzugt als aromatisches Diphenol wird 2,2-Bis-(4-hydroxyphenyl)-propan (Bisphenol A).

Die für die Zwecke der Erfindung geeigneten aromatischen Thiodiphenole haben die Strukturformel

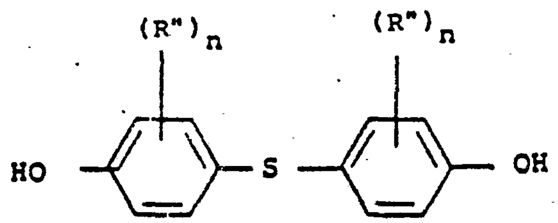

in der die Reste R", die gleich oder verschieden sein können, für H oder $C_1$-$C_4$-Alkyl, vorzugsweise für H stehen und n für O, 1 oder 2 steht.

Bevorzugt als aromatisches Thiodiphenol wird 4,4'-Thiodiphenol.

Die erfindungsgemäßen Copolycarbonate aus aromatischem Diphenol und aromatischem Thiodiphenol enthalten vorzugsweise etwa 2 bis 50 Mol-%, insbesondere etwa 5 bis 40 Mol-% des aromatischen Thiodiphenols, bezogen auf die Gesamtmole der Diphenole. Geeignete Copolycarbonate von aromatischem Diphenol und aromatischem Thiodiphenol werden in der US-Patentanmeldung 872 393 (25.1.1978) und in der US-PS 3 250 774 beschrieben.

Die aromatischen Copolycarbonate können durch Einarbeitung geringer, vorzugsweise zwischen etwa 0,05 und 2,0 Mol-% (bezogen auf die verwendeten Diphenole) liegender Mengen von trifunktionellen oder mehr als trifunktionellen Verbindungen, insbesondere Verbindungen mit drei oder mehr



BAD ORIGINAL

phenolischen Hydroxylgruppen, verzweigt sein. Polycarbonate dieser Art werden beispielsweise in den DE-OSen 1 570 533, 1 595 762, 2 116 974 und 2 113 347, in der GB-PS 1 079 821 und in der US-PS 3 544 514 beschrieben.

Als Beispiele von Verbindungen mit drei oder mehr als drei phenolischen Hydroxylgruppen, die verwendet werden können, seien genannt: Phloroglucin, 4,6-Dimethyl-2,4,6-tri-(4-hydroxyphenyl)-heptan, 2,4,6-Trimethyl-2,4,6-tri-(4-hydroxyphenyl)-heptan, 1,4,5-Tri-(4-hydroxyphenyl)-benzol, 1,1,1-Tri-(4-hydroxyphenyl)-äthan, Tri-(4-hydroxyphenyl)-phenylmethan, 2,2-Bis-(4,4-bis-(4-hydroxyphenyl)-cyclohexyl)-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol. Einige weitere trifunktionelle Verbindungen sind 2,4-Dihydroxybenzoesäure, Trimesinsäure, Cyanursäurechlorid und 3,3-Bis-(4-hydroxyphenyl)-2-oxo-2,3-dihydroindol.

Die aromatischen Copolycarbonate gemäß der Erfindung werden mit einer wirksamen Menge einer halogenhaltigen Verbindung, vorzugsweise einer brom- oder chlorhaltigen Verbindung, innig gemischt, wobei ein aromatisches Copolycarbonatgemisch, das verbesserte kritische Dicke, verbesserte Flammwidrigkeit und Feuerwiderstandsfähigkeit sowie gute Transparenz selbst bei einer Dicke von 1,6 mm aufweist, erhalten wird. Der Halogengehalt des aromatischen Polycarbonatgemisches beträgt vorzugsweise etwa 0,01 bis 8 Gew.-%, insbesondere etwa 1 bis 5 Gew.-%, bezogen auf das Gewicht des aromatischen Copolycarbonatgemisches.

Beliebige geeignete organische Verbindungen, die Halogenatome, vorzugsweise Chlor oder Brom, enthalten, können



BAD ORIGINAL

für die Zwecke der Erfindung verwendet werden. Diese Verbindungen können als Zusatzstoff im aromatischen Copolycarbonatgemisch vorhanden sein.

Bei einer bevorzugten Ausführungsform wird als halogenhaltige Verbindung ein Copolycarbonat aus aromatischem Diphenol und halogeniertem aromatischem Diphenol verwendet, das vorzugsweise einen Halogengehalt von etwa 3 bis 10 Gew.-%, insbesondere von etwa 6 bis 10 Gew.-% hat, bezogen auf das Gewicht des Copolycarbonats aus aromatischem Diphenol und halogeniertem aromatischem Diphenol. Diese halogenierten Copolycarbonatverbindungen werden in ähnlicher Weise wie die vorstehend beschriebenen Copolycarbonate von aromatischem Diphenol und aromatischem Thiodiphenol hergestellt.

Die vorstehend beschriebenen aromatischen Diphenole können als aromatische Diphenolkomponente bei der Herstellung dieser halogenierten Copolycarbonate verwendet werden.

Die für die Herstellung der halogenierten Copolycarbonatverbindungen geeigneten halogenierten aromatischen Diphenole umfassen die ringhalogenierten Ausführungsformen der vorstehend beschriebenen aromatischen Diphenole. Diese und weitere geeignete aromatische Dihydroxyverbindungen werden ferner beispielsweise in den folgenden Veröffentlichungen beschrieben: US-PSen 3 028 365, 2 999 835, 3 148 172, 3 271 368, 2 991 273, 3 271 367, 3 280 078, 3 014 891 und 2 999 846, DE-OSen 1 570 703, 2 063 050, 2 063 052, 2 211 956 und 2 211 957, FR-PS 1 561 518 und in der Monographie von H. Schnell "Chemistry and Physics of Polycarbonates", Interscience Publishers, New York 1964.

Als halogenierte aromatische Diphenole werden solche der Formel



BAD ORIGINAL

0001096

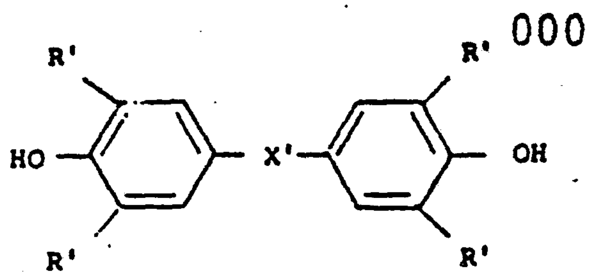

in der die Reste R' gleich oder verschieden sind und für H, $C_1$-$C_4$-Alkyl oder Halogen, vorzugsweise Cl oder Br, stehen und wenigstens einer der Reste R' Halogen ist und worin X' eine Bindung, $C_1$-$C_3$-Alkylen, $C_2$-$C_8$-Alkyliden, $C_5$-$C_{15}$-Cycloalkylen, $C_5$-$C_{15}$-Cycloalkyliden, $-SO_2-$, -SO-, -CO- oder

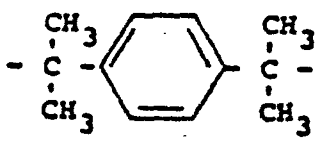

ist, bevorzugt.

Als Beispiele dieser halogenierten aromatischen Diphenole seien genannt: 2,2-Bis-(3,5-dichlor-4-hydroxyphenyl)-propan, 2,2-Bis-(3,5-dibrom-4-hydroxyphenyl)-propan (Tetrabrom-Bisphenol A), 2,2-Bis-(3-chlor-4-hydroxyphenyl)-propan, 2,2-Bis-(3-brom-4-hydroxyphenyl)-propan, 2,2-Bis-(3-brom-5-methyl-4-hydroxyphenyl)-propan und 2,2-Bis-(3-chlor-5-methyl-4-hydroxyphenyl)-propan.

Beispiele besonders bevorzugter halogenierter aromatischer Diphenole sind 2,2-Bis-(3,5-dichlor-4-hydroxyphenyl)-propan und 2,2-Bis-(3,5-dibrom-4-hydroxyphenyl)-propan.

Besonders bevorzugt als halogeniertes aromatisches Diphenol wird 2,2-Bis-(3,5-dibrom-4-hydroxyphenyl)-propan.

Außer den Copolycarbonaten aus den aromatischen Diphenolen und den halogenierten aromatischen Diphenolen können auch Homopolycarbonate aus den vorstehend genannten halogenierten aromatischen Diphenolen hergestellt und als halogenhaltige Verbindungen für die Zwecke der Erfindung verwendet werden.

Bei einer weiteren Ausführungsform der Erfindung können beliebige monomere halogenhaltige Verbindungen, die das Copolycarbonat nicht nachteilig beeinflussen und wenigstens ein Halogenatom, jedoch vorzugsweise 2 bis 10 Halogenatome enthalten, für die Zwecke der Erfindung verwendet werden.

Beispiele einiger geeigneter monomerer halogenhaltiger Verbindungen sind Tetrabrombuten, Tetrabromäthan, 1-Bromoctan, Tribrompropan, Octachlorpropan, Hexachloräthan, Tribrombutan, 1,2,3,4,5,6-Hexachlorcyclohexan u.dgl., geeignete halogenierte aromatische Kohlenwasserstoffe, z.B. Dichlorbiphenyl (o), (m), (p), α-Naphthylchlorid, ß-Naphthylchlorid, p-Bromacetophenon, α-Brombiphenyl, p-Brombiphenyl, p-Bromdiphenyläther, Bromjodbenzol (o), (m), (p), α-Naphthylbromid, ß-Naphthylbromid, ß-Bromphenetol, 9-Bromphenanthren, p-Jodbiphenyl, α-Naphthyljodid, ß-Naphthyljodid, 4,4'-Brombiphenyl, 4,4'-Dibrombiphenyläther, Decabromdiphenyläther, 4,4'-Dichlorbenzophenon, 3,3'-Dichlorbiphenyl, 4,4'-Dichlorbiphenyl, 1,3-Dichlornaphthalin, 1,4-Dichlornaphthalin, 1,5-Dichlornaphthalin, 1,7-Dichlornaphthalin, 2,6-Dichlornaphthalin, o-, m- und p-Dijodbenzol, 1,2,4-Tribrombenzol, 1,3,5-Tribrombenzol, 1,2,3,5-Tetrabrombenzol, Pentabrombenzol, Pentachlorbenzol, Chloracenaphthen, 2,7-Dibromfluoren, Tetrabromphthalsäureanhydrid, Pentachloräthylbenzol, Hexabrombenzol u.dgl. Entsprechende Chlor-, Fluor-, Brom- und Jodisomere, vorzugsweise Chlor- und Bromisomere dieser Verbindungen können ebenfalls für die Zwecke der Erfindung verwendet werden.

Außerdem können Ester, die wenigstens ein Halogenatom enthalten, in Mischung mit dem Copolycarbonat von aromatischem Diphenol und aromatischem Thiodiphenol verwendet werden, um dem Gemisch Flammwidrigkeit und Feuerwiderstandsfähigkeit zu verleihen. Beispielsweise können die aus halogenierten Säuren, Anhydriden und einwertigen Alkoholen oder mehrwertigen Alkoholen erhaltenen Ester verwendet werden. Als halogenierte organische Ester eignen sich beispielsweise Chloressigsäureester, Fluoressigsäureester, Bromessigsäureester, Halogenphthalsäureester, z.B. Dimethyltetrabromphthalat, Diäthyltetrabromphthalat, Di-n-propyl-tetrachlorphthalat und Di-n-octyl-dichlorphthalat und Gemische dieser Verbindungen.

Ferner können Gemische beliebiger der vorstehend genannten halogenierten Materialien sowie Kombinationen von halogenierten Zusatzstoffen mit einem halogenhaltigen Polycarbonat verwendet werden.

Gemäß einer bevorzugten Ausführungsform der Erfindung enthält das aromatische Copolycarbonatgemisch außerdem geringe Mengen eines Sulfonsäure- oder Carbonsäuresalzes. Vorzugsweise ist das Sulfonsäure- oder Carbonsäuresalz in einer Menge von etwa 0,01 bis 3 Gew.-%, insbesondere etwa 0,05 bis 1 Gew.-%, bezogen auf das Gewicht des aromatischen Copolycarbonagemisches, im Gemisch vorhanden. Besonders bevorzugt wird ein perfluoriertes Sulfonsäure- oder Carbonsäuresalz.

Geeignete Sulfonsäuresalze, die verwendet werden können, werden in der US-PS 3 775 367 beschrieben. Hierzu gehören Perfluoralkanalkalisulfonate und Perfluoralkanammoniumsulfonate, vorzugsweise solche, die etwa 4 bis 8 C-Atome im Alkylrest enthalten. Beispiele geeigneter Salze dieser Art sind Natrium- und Kaliumperfluorbutansulfonat, Natrium- und Kaliumperfluormethylbutansulfonat, Natrium- und Kaliumperfluoroctansulfonat, Natrium- und Kaliumperfluormethansulfonat, Natrium- und Kaliumperfluoräthansulfonat, Natrium- und Kaliumperfluorpropansulfonat, Natrium- und Kaliumperfluorhexansulfonat, Natrium- und Kaliumperfluorheptansulfonat, Tetraäthylammoniumperfluorbutansulfonat, Tetraäthylammoniumperfluormethylbutansulfonat und Gemische dieser Verbindungen. Die entsprechenden Salze von Chlor-, Brom- und jodhaltigen organischen Säuren können ebenfalls verwendet werden.

Beispiele geeigneter Carbonsäuresalze für die Zwecke der Erfindung sind die Alkalisalze, insbesondere die Natrium- und Kaliumsalze von aliphatischen, aromatischen oder aliphatisch-aromatischen einbasischen oder zweibasischen, gegebenenfalls halogenierten Carbonsäuren mit 1 bis 24 C-Atomen, z.B. die Salze von Ameisensäure, Essigsäure, Propionsäure, Buttersäure, Isobuttersäure, Valeriansäure, Capronsäure, Önanthsäure, Caprylsäure, Pelargonsäure, Caprinsäure, Laurinsäure, Stearinsäure, Behensäure, 5-Äthyl-dioxan-1,3-yl-5-carbonsäure, 3-(3,5-Di-t-butyl-4-hydroxyphenyl)-propionsäure, Ölsäure, Oxalsäure, Malonsäure, Bernsteinsäure, Glutarsäure, Adipinsäure, Pimelinsäure, Sebacinsäure, Benzoesäure und ihre p-alkylierten Derivate mit 1 bis 8 C-Atomen im Alkylrest, Salicylsäure, Terephthalsäure, Isophthalsäure, Phthalsäuremonobenzylester, Diglycolsäuremonodecylester, Adipinsäuremonobutylester und 3-Chlorbenzoesäure.

Diese Sulfonsäure- oder Carbonsäuresalze oder ihre Gemische können dem Polycarbonat während seiner Herstellung oder der Schmelze des fertigen Polycarbonats durch Homogenisierung unter Verwendung beispielsweise eines Extruders oder in beliebiger anderer geeigneter Weise, die gute Verteilung der Zusatzstoffe gemäß der Erfindung im Polycarbonatharz gewährleistet, zugesetzt werden. Einige dieser Verfahren werden beispielsweise in der US-PS 3 509 091 beschrieben.

Die Copolycarbonate gemäß der Erfindung können außerdem andere übliche Zusatzstoffe für Harze, z.B. Glasfasern, Pigmente, Farbstoffe, UV-Stabilisatoren, thermische Stabilisatoren, Entformungsmittel und Füllstoffe, enthalten. Beispiele solcher geeigneter Zusatzstoffe werden in der Veröffentlichung "Chemistry and Physics of Polycarbonates" von Hermann Schnell, Interscience Publishers, New York 1964, und in der Veröffentlichung "Polycarbonates" von



BAD ORIGINAL

W.F. Christopher und D.W. Fox, Reinhold Publishing Corp., New York 1962, genannt.

Alle Zusatzstoffe einschließlich der Sulfonsäure- oder Carbonsäuresalze und halogenhaltigen Verbindungen können mit den Copolycarbonaten in bekannten Mischer, z.B. Knetern, Einschnecken-Extrudern, Doppelschneckenextrudern und Walzenmischern, gemischt werden.

Es ist bekannt, daß die vorstehend genannten halogenierten aromatischen Diphenole Polycarbonaten, die daraus hergestellt werden, Flammwidrigkeit und Feuerwiderstandsfähigkeit verleihen. Ferner ist aus der US-PS 3 912 688 bekannt, daß schwefelhaltige aromatische Diphenole bei Verwendung in Kombination mit den halogenierten aromatischen Diphenolen zur Herstellung von Polycarbonaten ein flammwidriges Produkt ergeben, das Polycarbonaten auf Basis von schwefelhaltigen aromatischen Diphenolen oder halogenhaltigen aromatischen Diphenolen allein überlegen ist. Bei den schwefelhaltigen aromatischen Diphenolen, die nach dem Stand der Technik diese synergistischen Flammwidrigkeitseigenschaften hervorbringen, handelt es sich um die Bis-hydroxysulfone (siehe US-PS 3 912 688). Diese aus dem aromatischen Diphenol, dem halogenierten aromatischen Diphenol und den Bis-hydroxysulfonen synthetisierten Terpolycarbonate weisen jedoch niedrige Werte der kritsichen Dicke auf.

Überraschenderweise weisen die halogenhaltigen Copolycarbonatgemische gemäß der Erfindung nicht nur den flammwidrigen und feuerhemmenden Synergismus von Schwefel und Halogen (Gütewert V-O bei 1,6 mm gemäß UL Subject 94), sondern auch verbesserte Werte der kritischen Dicke im Vergleich zu den Werten der kritischen Dicke auf, die übliche halogenhaltige Co- und Homopolycarbonate, z.B. Copolycarbonate aus aromatischem Diphenol und halogeniertem aromatischem Diphenol, zeigen. Diese Verbesserung der kritischen Dicke ist sehr überraschend und unerwartet,

weil bekanntlich die kritische Dicke von Copolycarbonaten auf Basis von aromatischen Diphenolen und halogenierten aromatischen Diphenolen bedeutend geringer ist als die kritische Dicke von Polycarbonaten, die ausschließlich auf einem aromatischen Diphenol basieren. Dieser Unterschied in der kritischen Dicke kann der nachteiligen Wirkung der Halogenatome zugeschrieben werden. Durch die Kombination des Copolycarbonats aus aromatischem Diphenol und aromatischem Thiodiphenol mit der halogenhaltigen Verbindung wird somit dieser nachteilige Einfluß der Halogenatome ausgeschaltet, wobei halogenhaltige Copolycarbonatgemische mit verbesserter kritischer Dicke und verbesserter Flammwidrigkeit und Feuerwiderstandsfähigkeit erhalten werden.

Die Erfindung wird durch die folgenden Beispiele weiter erläutert.

## Beispiele

### Herstellung eines Copolycarbonats aus einem aromatischen Diphenol und einem halogenierten aromatischen Diphenol

Ein Copolycarbonat aus einem aromatischen Diphenol und einem halogenierten aromatischen Diphenol wurde durch Umsetzung eines Gemisches der Dinatriumsalze von 2,2-Bis-(4-hydroxyphenyl)-propan (BPA) und 2,2-Bis-(3,5-dibrom-4-hydroxyphenyl)-propan (TBBPA) mit Phosgen durch die vorstehend beschriebene Synthese durch Grenzflächen-Polykondensation hergestellt. Das erhaltene Copolycarbonatharz hatte einen Bromgehalt von etwa 9 Gew.-% und einen Schmelzindex von 5,9 g/10 Min. (ASTM D-1238).

### Herstellung von Copolycarbonaten von aromatischen Diphenolen und aromatischen Thiodiphenolen

A) Ein Copolycarbonat eines aromatischen Diphenols und eines aromatischen Thiodiphenols wurde durch Umsetzung eines Gemisches der Dinatriumsalze von 2,2-Bis-(4-hydroxyphenyl)-propan (BPA) und 4,4'-Thiodiphenol (TDP)

im Molverhältnis von 60:40 mit Phosgen durch die vorstehend beschriebene Synthese durch Grenzflächen-Polykondensation hergestellt. Das erhaltene Copolycarbonat hatte einen Schmelzindex von 7,4 g/10 Min. (ASTM D-1238).

B) Ein Copolycarbonat aus aromatischem Diphenol und aromatischem Thiodiphenol wurde auf die unter (A) beschriebene Weise hergestellt, wobei jedoch ein BPA/TDP-Gemisch im Molverhältnis von 70:30 verwendet wurde. Das erhaltene Copolycarbonat hatte einen Schmelzindex von 5,7 g/10 Min. (ASTM D-1238).

C) Ein Copolycarbonat aus aromatischem Diphenol und aromatischem Thiodiphenol wurde auf die unter (A) beschriebene Weise hergestellt, wobei jedoch ein Gemisch von BPA/TDP im Molverhältnis von 80:20 verwendet wurde. Das erhaltene Copolycarbonat hatte einen Schmelzindex von 2,5 g/10 Min. (ASTM D-1238).

D) Ein Copolycarbonat mit einem Schmelzindex von 7,2 g/10 Min. wurde durch Umsetzung eines Gemisches des Dinatriumsalzes von 2,2-Bis-(4-hydroxyphenyl)-propan (Bisphenol A) (BPA) und 4,4'-Thiodiphenol (TDP) mit Phosgen durch die vorstehend beschriebene Synthese durch Grenzflächen-Polykondensation hergestellt. 85 Mol-% Bisphenol A und 15 Mol-% 4,4'-Thiodiphenol, bezogen auf die Gesamtmole der Dihydroxyverbindungen, wurden verwendet.

## Beispiel 1

Das BPA/TBBPA-Copolycarbonat wurde mit dem gemäß Abschnitt (A) hergestellten BPA/TDP-Copolycarbonat im Gewichtsverhältnis von 56 : 44 gemischt. Das Gemisch wurde auf Kerbschlagzähigkeit, kritische Dicke und Flammwidrigkeit geprüft. Die Ergebnisse sind in Tabelle 1 genannt. Das Copolycarbonatgemisch war in hohem Maße transparent.



BAD ORIGINAL

Beispiel 2

Das BPA/TBBPA-Copolycarbonat wurde mit dem gemäß Abschnitt (B) hergestellten BPA/TDP-Copolycarbonat im Gewichtsverhältnis von 56:44 gemischt. Die Prüfergebnisse des Produkts sind in Tabelle 1 genannt. Das Copolycarbonatgemisch war in hohem Maße transparent.

Beispiel 3

Das BPA/TBBPA-Copolycarbonat wurde mit dem gemäß Abschnitt (C) hergestellten BPA/TDP-Copolycarbonat im Gewichtsverhältnis von 56:44 gemischt. Die Prüfergebnisse des Produkts sind in Tabelle 1 genannt. Das Copolycarbonatgemisch war in hohem Maße transparent.

Beispiel 4 (Vergleichsbeispiel)

Das BPA/TBBPA-Copolycarbonat wurde mit einem BPA-Polycarbonat, das einen Schmelzindex von 3 bis 5,9 g/10 Min. (ASTM D-1238) hatte, im Gewichtsverhältnis von 56:44 gemischt. Die Prüfergebnisse für das Produkt sind in Tabelle 1 genannt.



BAD ORIGINAL

Tabelle 1

Gemische von BPA/TBBPA-Copolycarbonat mit BPA/TDP-Copolycarbonat

| Beispiel | 1 | 2 | 3 | 4 (Vergleich) |
|---|---|---|---|---|
| Eigenschaften | | | | |
| Bromgehalt, % | 5,0 | 5,0 | 5,0 | 5,0 |
| Schwefelgehalt, % | 2,63 | 1,77 | 1,06 | 0,00 |
| 3,2 mm-Kerbschlagzähigkeit, Nm/cm (1) | 7,86 | 7,92 | 8,46 | 6,33 |
| 6,35 mm-Kerbschlagzähigkeit, Nm/cm (1) | 1,24 | 1,21 | 1,15 | 1,08 |
| Kritische Dicke, mm[1] | 4,32 | 4,2 | 3,94 | 3,43 |
| Schmelzindex,[2] g/10 Min. | 7,3 | 4,8 | 3,3 | 4,1 |
| Gütewert gemäß UL-94[3] (3,2 mm) (durchschnittl. Brenndauer, Sekunden) | V-O (0,9) | V-O (0,6) | V-O (0,6) | V-O (0,7) |
| Gütewert gemäß UL-94[3] (1,6 mm) (durchschnittl. Brenndauer, Sekunden) | V-O (3,0) | V-O (3,2) | V-O (2,1) | V-2 |

[1] ASTM D-256

[2] ASTM D-1238

[3] Test 94 der Underwriters Laboratories, Inc.: Norm für Tests zur Prüfung von Kunststoffen auf Entflammbarkeit für Teile in Vorrichtungen und Apparaturen.

Beispiel 5

Das gemäß Abschnitt (D) hergestellte BPA/TDP-Copolycarbonat (85/15) wurde mit 0,10 Gew.-% Kaliumperfluorbutansulfonat, bezogen auf das Gewicht des Copolycarbonatgemisches, innig gemischt und dann extrudiert, granuliert und zu Normprüfkörpern für die Bewertung der physikalischen Eigenschaften geformt. Die gemessenen Eigenschaften sind in Tabelle 2 genannt.



BAD ORIGINAL

## Beispiel 6

Das Copolycarbonat(D) wurde mit Decabromdiphenyläther in einer solchen Menge innig gemischt, daß das Copolycarbonatgemisch 5 Gew.-% Brom, bezogen auf das Gewicht des Copolycarbonatgemisches, enthielt. Die gemessenen Eigenschaften sind in Tabelle 2 genannt. Das geformte Copolycarbonatgemisch war bei einer Dicke von 1,6 mm in hohem Maße transparent.

## Beispiel 7

Das Copolycarbonat (D) wurde mit 0,10 Gew.-% Kaliumperfluorbutansulfonat und einer solchen Menge Decabromdiphenyläther innig gemischt, daß das Copolycarbonatgemisch 5 Gew.-% Brom, bezogen auf das Gewicht des Copolycarbonatgemisches, enthielt. Die gemessenen Eigenschaften sind in Tabelle 2 genannt. Außerdem erwies sich das geformte Copolycarbonatgemisch bei einer Dicke von 1,6 mm als in hohem Maße transparent.

## Beispiel 8

Das Copolycarbonat (D) wurde nur mit Decabromdiphenyläther in einer solchen Menge innig gemischt, daß das Copolycarbonatgemisch 4 Gew.-% Brom, bezogen auf das Gewicht des Copolycarbonatgemisches, enthielt. Die gemessenen Eigenschaften sind in Tabelle 2 genannt.

## Beispiel 9

Das Copolycarbonat (D) wurde mit 0,10 Gew.-% Kaliumperfluorbutansulfonat und einer solchen Menge Decabromdiphenyläther innig gemischt, daß das Copolycarbonatgemisch 4 Gew.-% Brom, bezogen auf das Gewicht des Copolycarbonatgemisches, enthielt. Die gemessenen Eigenschaften sind in Tabelle 2 genannt. Außerdem war das geformte Copolycarbonatgemisch bei einer Dicke von 1,6 mm in hohem Maße transparent.

0001096

## Beispiel 10

Das Copolycarbonat (D) wurde nur mit einer solchen Menge Decabromdiphenyläther innig gemischt, daß das Copolycarbonatgemisch 3 Gew.-% Brom, bezogen auf das Gewicht des Copolycarbonatgemisches, enthielt. Die gemessenen Eigenschaften sind in Tabelle 2 genannt.

## Beispiel 11

Das Copolycarbonat (D) wurde mit 0,10 Gew.-% Kaliumperfluorbutansulfonat und einer solchen Menge Decabromdiphenyläther innig gemischt, daß das Copolycarbonatgemisch 3 Gew.-% Brom, bezogen auf das Gewicht des Copolycarbonatgemisches, enthielt. Die gemessenen Eigenschaften sind in Tabelle 2 genannt. Ferner war das geformte Copolycarbonatgemisch bei einer Dicke von 1,6 mm in hohem Maße transparent.

## Beispiel 12

Das Copolycarbonat (D) wurde mit 0,10 Gew.-% Kaliumperfluorbutansulfonat und einer solchen Menge Decabromdiphenyläther innig gemischt, daß das Copolycarbonatgemisch 2,5 Gew.-% Brom, bezogen auf das Gewicht des Copolycarbonatgemisches, enthielt. Die gemessenen Eigenschaften sind in Tabelle 2 genannt. Ferner war das geformte Copolycarbonatgemisch bei einer Dicke von 1,6 mm in hohem Maße transparent.

## Beispiel 13

Das Copolycarbonat (D) wurde nur mit einer solchen Menge Decabromdiphenyläther innig gemischt, daß das Copolycarbonatgemisch 2 Gew.-% Brom, bezogen auf das Gewicht des Copolycarbonatgemisches, enthielt. Die gemessenen Eigenschaften sind in Tabelle 2 genannt.



BAD ORIGINAL

Beispiel 14

Das Copolycarbonat (D) wurde mit 0,10 Gew.-% Kaliumperfluorbutansulfonat und einer solchen Menge Decabromdiphenyläther innig gemischt, daß das Copolycarbonatgemisch 2,0 Gew.-% Brom, bezogen auf das Gewicht des Copolycarbonatgemisches, enthielt. Die gemessenen Eigenschaften sind in Tabelle 2 genannt. Ferner war das geformte Copolycarbonatgemisch bei einer Dicke von 1,6 mm in hohem Maße transparent.

Beispiel 15

Das Copolycarbonat (D) wurde nur mit einer solchen Menge Decabromdiphenyläther innig gemischt, daß das Copolycarbonatgemisch 1 Gew.-% Brom, bezogen auf das Copolycarbonatgemisch, enthielt. Die gemessenen Eigenschaften sind in Tabelle 2 genannt.

Beispiel 16

Das Copolycarbonat (D) wurde mit 0,10 Gew.-% Kaliumperfluorbutansulfonat und einer solchen Menge Decabromdiphenyläther innig gemischt, daß das Copolycarbonatgemisch 1 Gew.-% Brom, bezogen auf das Gewicht des Copolycarbonatgemisches, enthielt. Die gemessenen Eigenschaften sind in Tabelle 2 genannt. Ferner war das geformte Copolycarbonatgemisch bei einer Dicke von 1,6 mm in hohem Maße transparent.

Tabelle 2

Physikalische Eigenschaften von BPA/TDP-Copolycarbonaten (85/15), die einen Bromträger und/oder Kaliumperfluorbutansulfonat enthalten.

| Beispiel Nr. | Zusatzstoffe, Gew.-%: Kalium-perfluor-butan-sulfonat | Zusatzstoffe, Gew.-%: Von Decabromdiphenyläther stammendes Brom, % | Schmelzindex, g/10 Min. | UL-94 (1,6 mm): Gütewert | UL-94 (1,6 mm): Mittl. Brenndauer, Sek. | $O_2$-Index, % | Izod-Kerbschlagzähigkeit 3,2 mm | Izod-Kerbschlagzähigkeit 6,35 mm | Kritische Dicke, mm |
|---|---|---|---|---|---|---|---|---|---|
| 5 | 0.10 | -- | 8.5 | V-2 | -- | -- | 7,5 | 4,07 | 6,2 |
| 6 | -- | 5.0 | -- | V-0 | 3.4 | 29.50 | 8,1 | 1,21 | 5,21 |
| 7 | 0.10 | 5.0 | 9.5 | V-0 | 2.1 | 38.1 | 8,45 | 1,14 | 4,45 |
| 8 | -- | 4.0 | -- | V-2 | -- | 29.2 | 8,15 | 1,35 | 4,95 |
| 9 | 0.10 | 4.0 | 9.0 | V-0 | 2.6 | 37.0 | 7,99 | 1,24 | 4,45 |
| 10 | -- | 3.0 | -- | V-2 | -- | 29.10 | 7,84 | 1,55 | 5,21 |
| 11 | 0.10 | 3.0 | 8.9 | V-0 | 3.0 | 37.0 | 7,84 | 1,32 | 4,95 |
| 12 | 0.10 | 2.5 | -- | V-0 | 3.6 | -- | - | - | - |
| 13 | -- | 2.0 | -- | V-2 | -- | 28.93 | 7,94 | 1,82 | 5,72 |
| 14 | 0.10 | 2.0 | 8.7 | V-0 | 3.2 | 33.0 | 7,66 | 1,43 | 5,46 |
| 15 | -- | 1.0 | -- | V-2 | -- | -- | 7,66 | 2,95 | 5,97 |
| 16 | 0.10 | 1.0 | 8.5 | V-0+ (80%) | 4.6 | 30.9 | 7,54 | 1,69 | 5,72 |

+ Vier von fünf Prüfkörpern, die bei der genormten Testmethode verwendet wurden, zeigten einen Gütewert von VO-O beim Test UL-94 (1,6 mm) zur Bewertung der Flammwidrigkeit.

BAD ORIGINAL

Beispiel 17

Das BPA/TDP-Copolycarbonat (D) wurde mit 0,10 Gew.-% Kaliumperfluorbutansulfonat und einer solchen Menge des Bisphenol A/Tetrabrom-Bisphenol A-Copolycarbonats, das 9 Gew.-% Brom enthielt und einen Schmelzindex von 5,9 g/ 10 Min. hatte, innig gemischt, daß ein BPA/TDP-Copolycarbonatgemisch, das, bezogen auf das Gewicht des Copolycarbonatgemisches, 2 Gew.-% Brom enthielt, erhalten wurde. Die gemessenen Eigenschaften sind in Tabelle 3 genannt. Ferner war das geformte Copolycarbonat bei einer Dicke von 1,6 mm in hohem Maße transparent.

Beispiel 18

Der in Beispiel 17 beschriebene Versuch wurde wiederholt, wobei jedoch das BPA/TDP-Copolycarbonat mit 0,10 Gew.-% Kaliumperfluorbutansulfonat und einer solchen Menge des Bisphenol A/Tetrabrombisphenol A-Copolycarbonats innig gemischt wurde, daß das BPA/TDP-Copolycarbonatgemisch 3 Gew.-% Brom, bezogen auf das Gewicht des Copolycarbonatgemisches, enthielt. Die gemessenen Eigenschaften sind in Tabelle 3 genannt. Ferner wurde festgestellt, daß das geformte Copolycarbonatgemisch bei einer Dicke von 1,6 mm in hohem Maße transparent war.

Beispiel 19

Der in Beispiel 5 beschriebene Versuch wurde wiederholt, wobei jedoch das BPA-TDP-Copolycarbonat mit 0,10 Gew.-% Kaliumperfluorbutansulfonat und einer solchen Menge Tetrabrombisphenol A-homopolycarbonat mit einem Zahlenmittelmolekulargewicht $\bar{M}n$ von 4000 und einer relativen Viskosität von 1,03 gemischt wurde, daß das BPA/TDP-Copolycarbonatgemisch 1 Gew.-% Brom, bezogen auf das Gewicht des Copolycarbonatgemisches, enthielt. Die gemessenen Eigenschaften sind in Tabelle 3 genannt. Ferner wurde gefunden, daß das geformte Copolycarbonatgemisch bei einer Dicke von 1,6 mm in hohem Maße transparent war.

## Beispiel 20

Der in Beispiel 19 beschriebene Versuch wurde wiederholt, wobei jedoch das BPA/TDP-Copolycarbonat mit 0,10 Gew.-% Kaliumperfluorbutansulfonat und einer solchen Menge des Tetrabrombisphenol A-Homopolycarbonats innig gemischt wurde, daß das BPA/TDP-Copolycarbonatgemisch 2 Gew.-% Brom, bezogen auf das Gewicht des Copolycarbonatgemisches, enthielt. Die gemessenen Eigenschaften sind in Tabelle 3 genannt. Ferner wurde gefunden, daß das geformte Copolycarbonatgemisch bei einer Dicke von 1,6 mm in hohem Maße transparent war.

## Beispiel 21

Der in Beispiel 19 beschriebene Versuch wurde wiederholt, wobei jedoch das BPA/TDP-Copolycarbonat mit 0,10 Gew.-% Kaliumperfluorbutansulfonat und einer solchen Menge Tetrabrombisphenol A-Homopolycarbonat innig gemischt wurde, daß das BPA/TDP-Copolycarbonatgemisch 3 Gew.-% Brom, bezogen auf das Gewicht des Copolycarbonatgemisches, enthielt. Die gemessenen Eigenschaften sind in Tabelle 3 genannt. Ferner wurde gefunden, daß das geformte Copolycarbonatgemisch bei einer Dicke von 1,6 mm in hohem Maße transparent war.

### Tabelle 3

Flammwidrigkeit von BPA/TDP-Copolycarbonaten (85/15), die einen Bromträger und Kaliumperfluorbutansulfonat enthalten, beim Test UL-94

| Beispiel Nr. | Zusatzstoffe in Gew.-% | | Flammwidrigkeitstest UL-94 (1,6 mm) | |
|---|---|---|---|---|
| | Kaliumperfluorbutansulfonat | Br | Gütewert | Durchschnittl. Brenndauer, Sek. |
| 17 | 0,10 | 2,0[1] | V-2 | - |
| 18 | 0,10 | 3,0[1] | V-0 | 2,1 |
| 19 | 0,10 | 1,0[2] | V-0(80%)[3] | 3,2 |
| 20 | 0,10 | 2,0[2] | V-0 (80%)[3] | 3,4 |
| 21 | 0,10 | 3,0[2] | V-0 (80%)[3] | 2,6 |

[1] Bisphenol A/Tetrabrombisphenol A-Copolycarbonat (9 Gew.-% Br, Schmelzindex 5,9 g/10 Minuten).

[2] Tetrabromhomopolycarbonat ($\bar{M}_n$ 4000, relative Viskosität 1,03).

[3] Vier von fünf Prüfkörpern zeigten den Gütewert V-O.

Wie die vorstehenden Beispiele zeigen, weisen die halogenhaltigen aromatischen Copolycarbonatgemische gemäß der Erfindung sowohl verbesserte Flammwidrigkeit und Feuerwiderstandsfähigkeit als auch verbesserte Werte der kritischen Dicke auf.

## Patentansprüche

1. Copolycarbonate mit Gewichtsmittelmolekulargewichten von 10 000 bis 200 000 aus Diphenolen der Formel

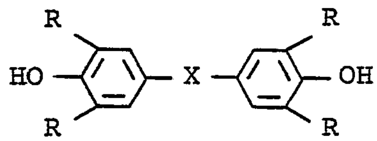

worin
die Reste R gleich oder verschieden sind und
für H oder $C_1$-$C_4$-Alkyl stehen und
worin
X für eine Bindung, $C_1$-$C_8$-Alkylen, $C_2$-$C_8$-Alkyliden, $C_5$-$C_{15}$-Cycloalkylen, $C_5$-$C_{15}$-Cycloalkyliden, -CO- oder

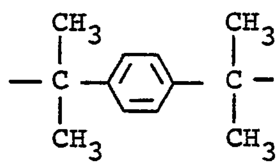

und Thiodiphenolen der Strukturformel

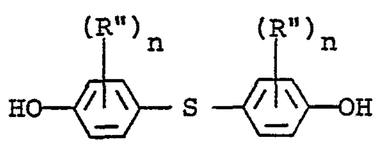

in der die Reste R", die gleich oder verschieden sein können, für H oder Alkyl stehen und
n für 0, 1 oder 2 steht, dadurch gekennzeichnet, daß der Gehalt an Thiodiphenolen etwa 5 bis 40 Mol%, bezogen auf die Gesamtmenge der Diphenole, ist und daß die Copolycarbonate durch die Einarbeitung von etwa 0,05 bis 2,0 Mol%, bezogen auf die Gesamtmenge

der Diphenole, von trifunktionellen oder mehr als trifunktionellen Verbindungen verzweigt sind.

2. Copolycarbonate gemäß Anspruch 1, dadurch gekennzeichnet, daß sie durch die Einarbeitung von Verbindungen mit drei oder mehr phenolischen Hydroxylgruppen verzweigt sind.

3. Copolycarbonate gemäß Ansprüchen 1 und 2, dadurch gekennzeichnet, daß der Gehalt an 4,4'-Thiodiphenol 15 bis 40 Mol%, bezogen auf die Gesamtmenge von 4,4'-Thiodiphenol und Bisphenol-A, ist (siehe Beispiele A bis D).

0040863

Europäisches Patentamt

# EUROPÄISCHER RECHERCHENBERICHT

Nummer der Anmeldung

EP 81 10 5093

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | US - A - 3 250 744 (H. SCHNELL et al.)<br>* Anspruch 1 * | 1 | C 08 G 63/68<br>63/62<br>C 08 L 69/00 |
| D | US - A - 3 544 514 (H. SCHNELL et al.)<br>* Anspruch 1; Spalte 5, Zeile 18 *<br>& DE - A - 1 570 533 | 1 | |
| D | DE - A - 1 595 762 (GENERAL ELECTRIC)<br>* Ansprüche 1,2 * | 1 | RECHERCHIERTE SACHGEBIETE (Int. Cl.3)<br>C 08 G 63/68<br>63/62<br>C 08 L 69/00 |
| A | US - A - 4 043 980 (A.L. BARON et al.)<br>* Anspruch 1 * | | |
| P/A | FR - A - 2 352 016 (MOBAY)<br>* Anspruch 1 * | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16.09.1981 | VAN HUMBEECK |